# FASCICULE DE BREVET EUROPEEN

(11) **EP 1 079 997 B1**
(45) Date de publication et mention de la délivrance du brevet: **08.05.2002**
(21) Numéro de dépôt: 99922232.6
(22) Date de dépôt: 27.05.1999
(51) Int. Cl.: B60S 1/34

(54) **SYSTEME D'ESSUYAGE POUR VEHICULE AUTOMOBILE COMPORTANT UNE GLISSIERE PERFECTIONNEE**
SCHEIBENWASCHVORRICHTUNG FÜR KRAFTFAHRZEUGE MIT VERBESSERTER FÜHRUNG
MOTOR VEHICLE WIPER SYSTEM COMPRISING AN IMPROVED SLIDE

(30) Priorité: 28.05.1998 FR 9806725
(43) Date de publication de la demande: 07.03.2001
(73) Titulaire: VALEO SYSTEMES D'ESSUYAGE, 78321 La Verrière (FR)
(72) Inventeur: HOSPITAL, Eric, F-78180 Montigny le Bretonneux (FR)
(74) Mandataire: Lemaire, Marc
(86) Numéro de dépôt international: FR9901249
(87) Numéro de publication internationale: WO9961291

(56) Documents cités:
- FR-A- 2 740 749
- US-A- 5 186 064

## Description

L'invention concerne un système d'essuyage pour véhicule automobile comportant une glissière perfectionnée.

L'invention se rapporte plus particulièrement à un système d'essuyage pour véhicule automobile, du type dans lequel un essuie-glace est entraîné dans un mouvement de balayage par un arbre d'entraînement lui-même entraîné en rotation autour de son axe par un moteur, du type dans lequel le système d'essuyage comporte des moyens pour faire varier l'orientation de l'axe de l'arbre d'entraînement, et du type dans lequel un tronçon de guidage de l'arbre est reçu entre deux faces internes, parallèles et en vis-à-vis, d'une glissière comportant un élément de structure fixe muni de deux cloisons parallèles à la fois à l'axe de l'arbre d'entraînement et à l'axe longitudinal de la glissière.

Un tel système d'essuyage est par exemple décrit dans le document de FR-A-2.753.942. Le système d'essuyage décrit dans ce document comporte donc un arbre d'entraînement qui est monté mobile en rotation dans un support par l'intermédiaire d'une articulation à rotule qui lui assure trois degrés de liberté en rotation. Toutefois, pour limiter la possibilité de débattement de cet arbre, il est prévu que l'extrémité inférieure de l'arbre est reçue dans une glissière de telle sorte que l'arbre ne peut plus tourner que, d'une part, autour de son axe, et d'autre part autour d'un axe contenant le centre de rotation de l'articulation à rotule et l'axe longitudinal de la glissière. Le système d'essuyage comporte par ailleurs des moyens permettant de faire varier l'orientation de l'arbre d'entraînement autour de ce deuxième axe, notamment en fonction de la position angulaire de l'arbre au tour de son axe propre.

Dans un tel système, il est important de pouvoir supprimer tout jeu entre l'extrémité inférieure de l'arbre, qui forme un tronçon de guidage, et les deux faces internes en vis-à-vis de la glissière. En effet, on évite ainsi toute possibilité de choc entre l'arbre et la glissière, ce qui permet de limiter de manière importante le bruit de fonctionnement du système.

Cependant, l'arbre ne peut pas être reçu avec un trop fort serrage à l'intérieur de la glissière, sous peine de d'augmenter les frottements entre l'arbre et la glissière, ce qui est nuisible d'une part au rendement du mécanisme et donc à la consommation d'énergie nécessaire pour en assurer l'entraînement, et d'autre part à une durée de vie satisfaisante du mécanisme du fait de l'usure due aux frottements.

L'invention a donc pour but de proposer une nouvelle conception d'un système d'essuyage qui, tout en permettant un fonctionnement sans à-coups, sans choc et donc sans bruit, permette de bien maîtriser le serrage du tronçon de guidage de l'arbre dans la glissière.

Dans ce but, l'invention propose un système d'essuyage du type décrit précédemment, caractérisé en ce que l'une au moins des faces internes de la glissière est formée par un plateau de frottement dont une face externe coopère avec des moyens déformables qui sont interposés entre le plateau de frottement et une cloison fixe de la glissière pour permettre un débattement du plateau de frottement selon une direction transversale perpendiculaire au plan du plateau, et en ce que, lorsque le tronçon de guidage est reçu dans la glissière, les moyens déformables sollicitent le plateau de manière que le tronçon soit en appui simultanément contre les deux faces internes opposées de la glissière.

Selon des modes de réalisation de l'invention :
- les moyens déformables sont constitués par une plaque en matériau élastomère dont une face intérieure est en appui contre la face externe du plateau et dont une face extérieure est en appui contre la cloison de la glissière.
- la plaque déformable comporte, sur au moins l'une des ses faces, des protubérances en relief.
- les protubérances en relief présentent la forme de barres .
- les protubérances en relief présentent la forme de barres ondulées.
- les protubérances en relief présentent la forme de plots.
- les plots sont sensiblement cylindriques et pleins.
- la plaque déformable comporte, sur sa face opposée à celle qui porte les protubérances, des évidements aménagés en correspondances avec les protubérances.
- les protubérances sont agencées sur la face intérieure de la plaque déformable.
- les protubérances sont agencées sur la face extérieure de la plaque déformable.
- la plaque déformable est réalisée par extrusion.
- la plaque déformable est réalisée par moulage.
- la plaque déformable est surmoulée sur le plateau de frottement.
- la plaque déformable est collée sur le plateau de frottement.
- la plaque déformable comporte, à ses deux extrémités longitudinales, des capuchons qui s'étendent transversalement vers l'intérieur depuis la face intérieure de la plaque et qui délimitent chacun un logement, les deux logements étant ouverts longitudinalement en direction l'un de l'autre pour recevoir chacun une extrémité longitudinale correspondante du plateau de frottement.
- la glissière comporte deux cloisons fixes opposées, deux plateaux de frottements, et deux éléments déformables qui sont interposés respectivement entre l'un des plateaux et l'une des cloisons, et en ce que le tronçon de guidage de l'arbre est reçu avec serrage entre les deux plateaux de frottement.
- les deux éléments déformables sont réalisés sous la forme d'un bloc amortisseur en une seule pièce.
- le bloc amortisseur est surmoulé autour des deux plateaux de frottements.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective schématique illustrant de manière partielle un système d'essuyage conforme aux enseignements de l'invention ;
- la figure 2 est une vue similaire à celle de la figure 1 illustrant une variante de réalisation de l'invention ;
- la figure 3 est une vue en coupe transversale illustrant une variante de l'invention ;
- la figure 4 est une vue partielle en perspective d'une plaque déformable selon invention ;
- les figures 5 et 6 sont des vues similaires à celles de la figure 4 illustrant des variantes de réalisation d'une plaque déformable ;
- la figure 7 est une vue en coupe par un plan longitudinal et transversal d'un bloc amortisseur comportant deux plateaux de frottement ;
- la figure 8 est une vue schématique en perspective illustrant une autre forme de glissière selon l'invention.

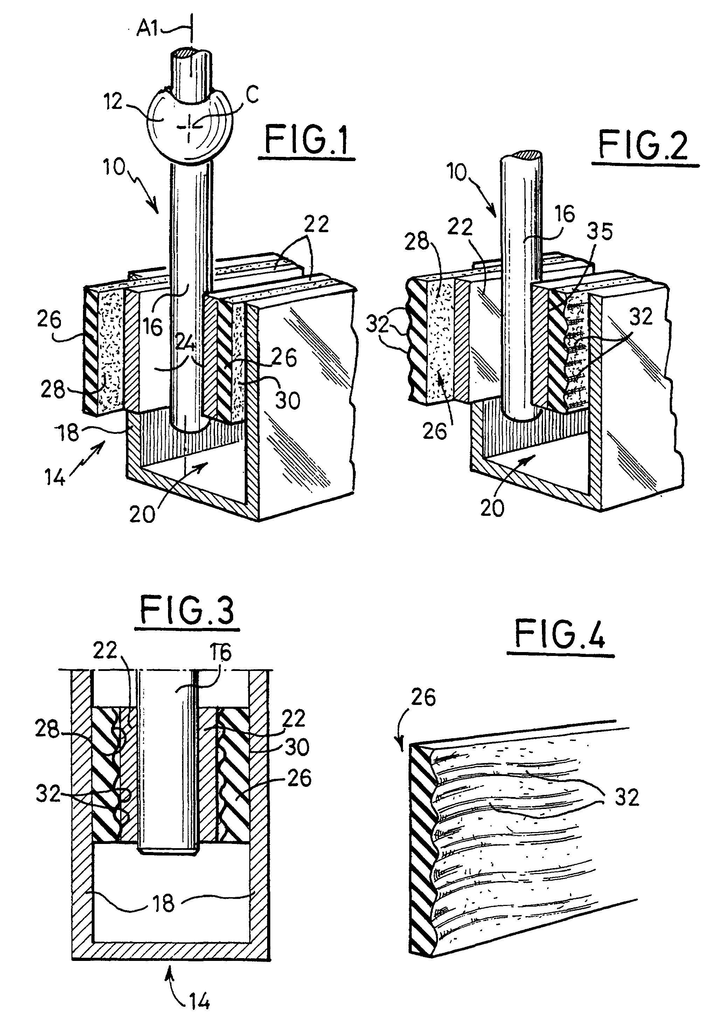

On a illustré sur la figure 1 de manière schématique une partie d'un système d'essuyage de véhicule automobile. Plus précisément, on a illustré un arbre d'entraînement d'essuie-glace 10, d'axe A1, qui est articulé autour d'un point C par rapport à un support (non représenté) par l'intermédiaire d'une articulation à rotule 12. L'axe A1 passe par le point C et l'articulation à rotule 12 donne théoriquement trois degrés de liberté à l'arbre 10 autour du point C.

Pour limiter le débattement de l'arbre 10, et notamment pour supprimer un de ses degrés de liberté en rotation autour du point C, l'extrémité inférieure 16 de l'arbre 10 est reçue dans une glissière 14 d'axe longitudinal.

La glissière 14 comporte un élément de structure fixe muni de deux cloisons 18 parallèles à la fois à l'axe A1 et à l'axe longitudinal de la glissière. Les deux cloisons 18 délimitent entre elles un espace 20 à l'intérieur duquel est reçue l'extrémité inférieure 16 de l'arbre 10. Conformément aux enseignements de l'invention, l'arbre 10 est reçu entre deux plateaux de frottements de 22 qui s'étendent parallèlement aux cloisons 18, entre les deux cloisons.

Selon l'invention, l'extrémité inférieure 16 de l'arbre 10 est au contact simultanément des faces internes opposées et en vis-à-vis 24 de chacun des deux plateaux 22. Ainsi, l'extrémité 16 de l'arbre 10 est immobilisée selon la direction transversale et l'arbre 10 se trouve immobilisé en rotation autour d'un axe longitudinal passant par le point C.

Pour cela, on a interposé entre chaque plateau 22 et la cloison 18 correspondante, un élément déformable 26 qui, la cloison 18 étant fixe, sollicite le plateau 22 transversalement vers l'intérieur. L'ensemble est dimensionné de telle sorte que lorsque l'extrémité 16 de l'arbre 10 est reçue entre les plateaux de frottements 22, les deux éléments déformables 26 sont comprimés entre le plateau 22 et la cloison 18.

Selon un mode de préféré de réalisation de l'invention, les éléments déformables 26 sont réalisés sous la forme de plaques en matériau élastomère.

Chaque plaque déformable 26 est donc en appui par une face intérieure 28 contre le plateau de frottement 22, et, par une face extérieure 30, contre une face interne de la cloison 18 correspondante.

Dans l'exemple de réalisation illustré sur la figure 1, les deux faces intérieure 28 et extérieure 30 de la plaque déformable 26 sont lisses et planes.

Au contraire, dans les exemples de réalisation de l'invention qui sont illustrés aux figures 2 et 3, les plaques déformables 26 sont pourvues, sur au moins l'une de leurs faces 28, 30, de protubérances 32 en relief.

Dans ces deux exemples, les protubérances 32 sont réalisées sous la forme de barres longitudinales qui s'étendent de manière rectiligne, parallèlement l'une à l'autre. Dans l'exemple de réalisation de la figure 2, les protubérances 32 sont portées par les faces extérieures 30 de chacune des deux plaques déformables 26, tandis que dans l'exemple de réalisation illustré à la figure 3, les plaques déformables 26 sont pourvues de protubérances 32 sur leurs faces intérieures 28 qui sont au contact du plateau de frottement 22 correspondant. Dans les deux cas, les plaques déformables 26 peuvent par exemple être réalisés par extrusion et être rapportées par collage sur la face externe 35 du plateau de frottement 22.

Les protubérances 32 permettent de limiter la surface de contact entre le matériau élastomère et les deux éléments rigides, ce qui permet notamment de mieux pouvoir maîtriser l'écrasement de la plaque 26 en fonction de l'effort qui lui est appliqué par l'arbre 10 par l'intermédiaire du plateau de frottement 22. Bien entendu, on peut prévoir de disposer des protubérances sur les deux faces 28, 30 de la plaque déformable 26.

Dans l'exemple de réalisation illustré à la figure 4, les barres longitudinales 32 présentent un profil non pas rectiligne mais ondulé, ce qui permet d'améliorer la répartition des efforts transmis entre la cloison 18 et la plaque déformable 26.

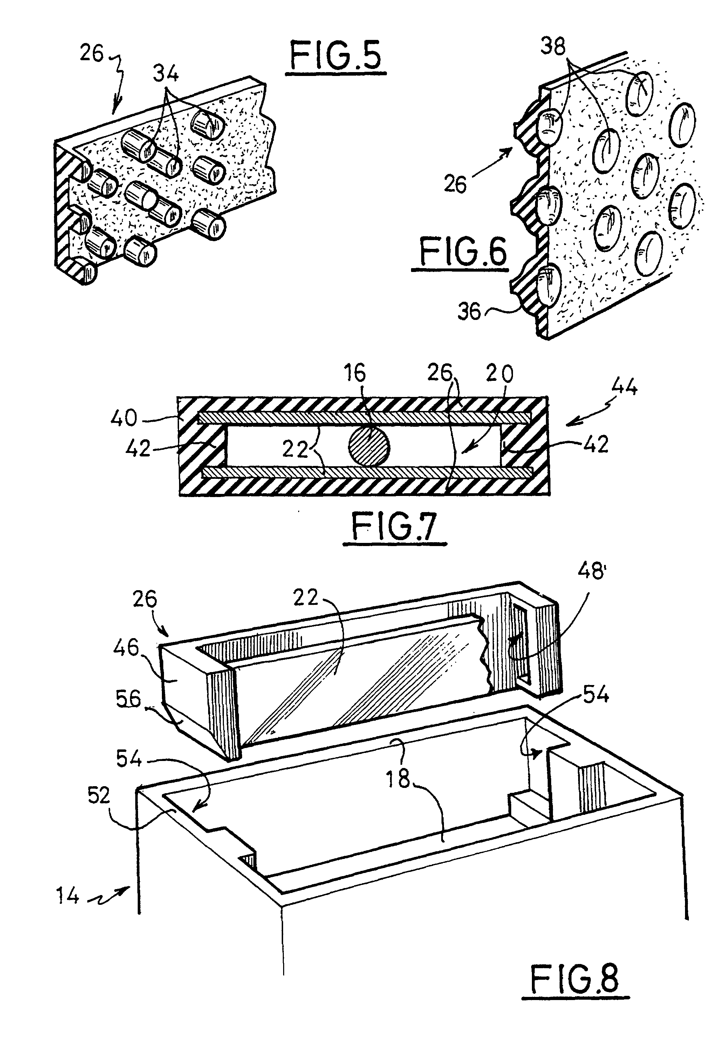

Dans l'exemple de réalisation illustré sur la figure 5, la plaque déformable 26 comporte, sur une de ses faces 28, 30, des plots cylindriques 34 qui s'étendent transversalement en relief et qui sont disposés en quinconce. Dans ces deux derniers modes de réalisation de l'invention, la plaque 26 peut par exemple être réalisée par moulage et fixée par collage sur le plateau de frottement 22 correspondant. Eventuellement on peut aussi prévoir que la plaque 26 soit surmoulée sur le plateau 22.

Dans celui de la figure 6, la plaque 26 comporte des plots 36 dont la forme en section permet d'optimiser leur résistance à l'écrasement en fonction de l'effort exercé. En effet, sur celle des faces 28, 30 opposée à la face sur laquelle les plots 36 sont formés en relief, la plaque 26 comporte des évidements 38 qui sont agencés exactement en correspondance avec les plots en relief 36 de l'autre face. Grâce à ces évidements 38, on parvient à maintenir une épaisseur de matière en relativement constante ce qui simplifie la maîtrise de l'écrasement de la plaque.

De plus, les évidements 38 présentent sensiblement une forme de bol de sorte que l'effort pour obtenir un écrasement transversal donné du plot 36 est sensiblement proportionnel à cet écrasement.

Bien entendu, l'invention peut aussi être mise en oeuvre en ne prévoyant un plateau de frottement mobile transversalement que d'un côté de la glissière, l'élément déformable 26 associé devant alors rattraper tout le jeu éventuel pour permettre de plaquer l'arbre à la fois contre la face interne de la cloison opposée et contre la face interne du plateau de frottement.

Toutefois, lorsque la glissière 14 comporte deux plateaux de frottements 22, on peut prévoir, ainsi que cela est illustré à la figure 7, que les deux plaques déformables 26 associées à ces deux plateaux 22 soit réalisées en une seule pièce, par exemple par moulage. Comme on peut le voir sur la figure 7, les deux plaques déformables 26 sont reliées, à chacune de leurs extrémités longitudinales par des traverses 40 réalisées par continuité de matière, les traverses 40 comportant un ergot 42 qui s'étend longitudinalement de manière à être reçu entre les deux faces internes 24 des plateaux 22 pour déterminer l'écartement des plateaux 22 et pour en assurer la fixation. Le bloc amortisseur 44 formé par les deux plaques déformables 26 et les deux traverses 40 est susceptible d'être surmoulé autour des deux plateaux de frottements 22.

On a illustré sur la figure 8 un autre mode de réalisation de l'invention dans lequel la plaque déformable 26 comporte, à chacune de ses extrémités longitudinales, des capuchons 46 qui s'étendent transversalement vers l'intérieur depuis la face intérieure 28 de la plaque 26. Dans chaque capuchon 46, on a formé un logement 48 qui est ouvert longitudinalement en direction de l'autre capuchon 46. Les deux logements 48 sont destinés à recevoir les extrémités longitudinales du plateau de frottement 22 qui peut être engagé successivement dans les deux logements par déformation de l'élément déformable 26. Une fois que les deux extrémités du plateau 22 sont reçues dans les logements 48, la plaque déformable 26 et le plateau 22 sont solidaires l'un de l'autre.

On a par ailleurs illustré sur cette figure 8 un mode particulier de réalisation de la structure fixe 50 de la glissière 14. Comme on peut le voir sur la figure, les deux cloisons 18 sont reliées transversalement à leurs extrémités longitudinales par des parois transversales 52. Dans chaque paroi 52, il est prévu des dégagements 54 destinés à recevoir chacun l'un des capuchons 46 d'un élément déformable 26.

La glissière illustrée comportant deux plateaux de frottements de 22, et donc deux plaques déformables 26, chaque paroi 52 comporte donc deux dégagements 54. Les dégagements 54 présentent la même largeur transversale que les capuchons 46 et la même dimension selon la direction verticale de manière à déterminer très précisément la position de l'ensemble formé par la plaque déformable 26 et le plateau de frottement 22.

Par ailleurs, on peut voir que l'un des capuchons 46 de l'élément déformable 26 comporte un pan coupé 56 qui crée une dissymétrie. Le dégagement 54 correspondant présente bien entendu lui aussi un pan coupé complémentaire (non représenté) de telle sorte que les pans coupés associés n'autorisent le montage de l'élément déformable 26 et du plateau de frottement 22 que dans un seul sens afin d'assurer que l'ensemble ainsi formé soit bien positionné de telle sorte que le plateau 22 soit transversalement à l'intérieur et la plaque déformable 26 transversalement à l'extérieur.

Dans les deux modes de réalisation de l'invention illustrés aux figures 7 et 8, on remarque que la ou les plateaux de frottement peuvent être montés dans la glissière sans qu'il n'y ait de contact entre le plateau et la structure fixe de la glissière. Cette disposition est particulièrement avantageuse car elle évite toute de transmission de vibration de l'un vers l'autre.

Bien entendu, l'invention n'est pas limitée aux modes de réalisation décrits et l'homme du métier pourra très simplement déduire d'autres modes de réalisation, notamment des plaques déformables, par simple combinaison des caractéristiques des différents modes de réalisation illustrés.

## Revendications

1. Système d'essuyage pour véhicule automobile, du type dans lequel un essuie-glace est entraîné dans un mouvement de balayage par un arbre d'entraînement (10) lui-même entraîné en rotation autour de son axe (A1) par un moteur, du type dans lequel le système d'essuyage comporte des moyens pour faire varier l'orientation de l'axe (A1) de l'arbre d'entraînement (10), et du type dans lequel un tronçon de guidage (16) de l'arbre (10) est reçu entre deux faces internes, parallèles et en vis-à-vis, d'une glissière (14) comportant un élément de structure fixe muni de deux cloisons (18) parallèles à la fois à l'axe (A1) de l'arbre d'entraînement et à l'axe longitudinal de la glissière,
**caractérisé en ce que** l'une au moins des faces internes de la glissière est portée par un plateau de frottement (22) dont une face externe coopère avec des moyens déformables (26) qui sont interposés entre le plateau de frottement (22) et une cloison fixe (18) de la glissière (14) pour permettre un débattement du plateau de frottement (22) selon une direction transversale perpendiculaire au plan du plateau (22), et **en ce que**, lorsque le tronçon de guidage (16) est reçu dans la glissière (14), les moyens déformables sollicitent le plateau (22) de manière que le tronçon (16) soit en appui simultanément contre les deux faces internes opposées de la glissière (14).

2. Système d'essuyage selon la revendication 1, **caractérisé en ce que** les moyens déformables sont constitués par une plaque (26) en matériau élastomère dont une face intérieure (28) est en appui contre la face externe (35) du plateau (22) et dont une face extérieure (30) est en appui contre la cloison (18) de la glissière (14).

3. Système d'essuyage selon la revendication 2, **caractérisé en ce que** la plaque déformable (26) comporte, sur au moins l'une des ses faces (28, 30), des protubérances en relief (32, 34 ,36).

4. Système d'essuyage selon la revendication 3, **caractérisé en ce que** les protubérances en relief présentent la forme de barres (32).

5. Système d'essuyage selon la revendication 4, **caractérisé en ce que** les protubérances en relief présentent la forme de barres ondulées.

6. Système d'essuyage selon la revendication 3, **caractérisé en ce que** les protubérances en relief présentent la forme de plots (34, 36).

7. Système d'essuyage selon la revendication 6, **caractérisé en ce que** les plots (34) sont sensiblement cylindriques et pleins.

8. Système d'essuyage selon l'une quelconque des revendications 3 à 6, **caractérisé en ce que** la plaque déformable (26) comporte, sur sa face (28, 30) opposée à celle (30, 28) qui porte les protubérances, des évidements (38) aménagés en correspondances avec les protubérances.

9. Système d'essuyage selon l'une quelconque des revendications 3 à 8, **caractérisé en ce que** les protubérances (32, 34, 36) sont agencées sur la face intérieure (28) de la plaque déformable (26).

10. Système d'essuyage selon l'une quelconque des revendications 3 à 8, **caractérisé en ce que** les protubérances (32, 34, 36) sont agencées sur la face extérieure (30) de la plaque déformable (26).

11. Système d'essuyage selon l'une quelconque des revendications 2 à 10, **caractérisé en ce que** la plaque déformable (26) est réalisée par extrusion.

12. Système d'essuyage selon l'une quelconque des revendications 2 à 10, **caractérisé en ce que** la plaque déformable (26) est réalisée par moulage.

13. Système d'essuyage selon la revendication 12, **caractérisé en ce que** la plaque déformable (26) est surmoulée sur le plateau de frottement (26).

14. Système d'essuyage selon l'une quelconque des revendications 2 à 12, **caractérisé en ce que** la plaque déformable (26) est collée sur le plateau de frottement (22).

15. Système d'essuyage selon l'une quelconque des revendications 2 à 12, **caractérisé en ce que** la plaque déformable (26) comporte, à ses deux extrémités longitudinales, des capuchons (46) qui s'étendent transversalement vers l'intérieur depuis la face intérieure (28) de la plaque (26) et qui délimitent chacun un logement (48), les deux logements (48) étant ouverts longitudinalement en direction l'un de l'autre pour recevoir chacun une extrémité longitudinale correspondante du plateau de frottement (22).

16. Système d'essuyage selon l'une quelconque des revendications précédentes, **caractérisé en ce que** la glissière (14) comporte deux cloisons fixes opposées (18), deux plateaux de frottements (22), et deux éléments déformables (26) qui sont interposés respectivement entre l'un des plateaux (22) et l'une des cloisons (18), et **en ce que** le tronçon de guidage (16) de l'arbre (10) est reçu avec serrage entre les deux plateaux de frottement (22).

17. Système d'essuyage selon la revendication 16, **caractérisé en ce que** les deux éléments déformables (26) sont réalisés sous la forme d'un bloc amortisseur (44) en une seule pièce.

18. Système d'essuyage selon la revendication 17, **caractérisé en ce que** le bloc amortisseur (44) est surmoulé autour des deux plateaux de frottements (22).

## Patentansprüche

1. Wischersystem für Automobil-Fahrzeuge, wobei ein Scheibenwischer von einer Antriebswelle (10) zu einer Wischbewegung angetrieben wird, deren Drehung um ihre Achse (A1) herum von einem Motor angetrieben wird, wobei das Wischersystem Mittel umfasst, um die Ausrichtung der Achse (A1) der Antriebswelle (10) zu variieren, und wobei ein Führungsabschnitt (16) der Welle (10) zwischen zwei Innenseiten eingefügt ist, die parallel und gegenüber einer Gleichschiene (14) verlaufen, die ein festes Strukturelement umfasst, das zwei Wände aufweist (18), die gleichzeitig parallel zur Achse (A1) der Antriebswelle und zur Längsachse der Gleitschiene verlaufen, **dadurch gekennzeichnet, dass** zumindest eine der Innenseiten der Gleitschiene von einer Reibungsfläche (22) getragen wird, von der eine Außenseite mit verformbaren Mitteln (26) zusammenwirkt, die zwischen der Reibungsfläche (22) und einer festen Wand (18) der Gleitschiene (14) eingefügt sind, um einen Ausschlag der Reibungsfläche (22) nach einer lotrecht zur Flächenebene (22) quer verlaufenden Richtung zu ermöglichen, und dass die verformbaren Mittel, wenn der Führungsabschnitt (16) in der Gleitschiene (14) steckt, die Reibungsfläche (22) so beaufschlagen, dass sich der Abschnitt (16) gleichzeitig gegen die beiden sich gegenüberliegenden Innenseiten der Gleitschiene (14) abstützt.

2. Wischersystem gemäss Anspruch 1, **dadurch gekennzeichnet, dass** die verformbaren Mittel aus einer Elastomer-Platte (26) bestehen, von der sich eine Innenseite (28) gegen die Außenseite (35) der Reibungsfläche (22) und eine Außenseite (30) gegen die Wand (18) der Gleitschiene (14) abstützt.

3. Wischersystem gemäss Anspruch 2, **dadurch gekennzeichnet, dass** die verformbare Platte (26) an mindestens einer ihrer Seiten (28, 30) erhabene Protuberanzen (32, 34, 36) umfasst.

4. Wischersystem gemäss Anspruch 3, **dadurch gekennzeichnet, dass** die erhabenen Protuberanzen eine Stabform (32) aufweisen.

5. Wischersystem gemäss Anspruch 4, **dadurch gekennzeichnet, dass** die erhabenen Protuberanzen eine Wellenstabform aufweisen.

6. Wischersystem gemäss Anspruch 3, **dadurch gekennzeichnet, dass** die erhabenen Protuberanzen eine Stiftform (34, 36) aufweisen.

7. Wischersystem gemäss Anspruch 6, **dadurch gekennzeichnet, dass** die Stifte (34) etwa zylindrisch und voll sind.

8. Wischersystem gemäss einem der Ansprüche 3 bis 6, **dadurch gekennzeichnet, dass** die verformbare Platte (26) an ihrer Seite (28, 30), die der die Protuberanzen tragenden Seite (30, 28) gegenüberliegt, den Protuberanzen entsprechende Vertiefungen (38) umfasst.

9. Wischersystem gemäss einem der Ansprüche 3 bis 8, **dadurch gekennzeichnet, dass** die Protuberanzen (32, 34, 36) an der Innenseite (28) der verformbaren Platte (26) vorgesehen sind.

10. Wischersystem gemäss einem der Ansprüche 3 bis 8, **dadurch gekennzeichnet, dass** die Protuberanzen (32, 34, 36) an der Außenseite (30) der verformbaren Platte (26) vorgesehen sind.

11. Wischersystem gemäss einem der Ansprüche 2 bis 10, **dadurch gekennzeichnet, dass** die verformbare Platte (26) per Extrusion hergestellt wird.

12. Wischersystem gemäss einem der Ansprüche 2 bis 10, **dadurch gekennzeichnet, dass** die verformbare Platte (26) per Formerei hergestellt wird.

13. Wischersystem gemäss Anspruch 12, **dadurch gekennzeichnet, dass** die verformbare Platte (26) an der Reibungsfläche (22) angeformt ist.

14. Wischersystem gemäss einem der Ansprüche 2 bis 12, **dadurch gekennzeichnet, dass** die verformbare Platte (26) auf die Reibungsfläche (22) aufgeklebt ist.

15. Wischersystem gemäss einem der Ansprüche 2 bis 12, **dadurch gekennzeichnet, dass** die verformbare Platte (26) an ihren beiden Längsenden Kappen (46) umfasst, die sich von der Innenseite (28) der Platte (26) quer nach innen erstrecken und die jeweils eine Aufnahme (48) abgrenzen, wobei die beiden Aufnahmen (48) jeweils in Längsrichtung zueinander offen sind, um jeweils ein entsprechendes Längsende der Reibungsfläche (22) aufzunehmen.

16. Wischersystem gemäss einem der vorherigen Ansprüche, **dadurch gekennzeichnet, dass** die Gleitschiene (14) zwei feste, gegenüberliegende Wände (18), zwei Reibungsflächen (22) und zwei verformbare Elemente (26) umfasst, die jeweils zwischen einer der Flächen (22) und einer der Wände (18) eingefügt sind, und wobei der Führungsabschnitt (16) der Welle (10) zwischen den beiden Reibungsflächen (22) eingeklemmt wird.

17. Wischersystem gemäss Anspruch 16, **dadurch gekennzeichnet, dass** die beiden verformbaren Elemente (26) in Form eines einteiligen Dämpfungsblocks (44) hergestellt sind.

18. Wischersystem gemäss Anspruch 17, **dadurch gekennzeichnet, dass** der Dämpfungsblock (44) um die beiden Reibungsflächen (22) herum angeformt ist.

## Claims

1. A wiping system for a motor vehicle of the type in which a wiper is driven in a sweeping movement by a drive shaft (10) itself driven in rotation about its axis (A1) by a motor, of the type in which the wiping system has means for varying the orientation of the axis (A1) of the drive shaft (10), and of the type in which a guide section (16) of the shaft (10) is received between two internal faces, parallel and facing each other, of a runner (14) having a fixed structure element provided with two partitions (18) parallel both to the axis (A1) of the drive shaft and to the longitudinal axis of the runner,
**characterised in that** at least one of the internal faces of the runner is formed by a friction plate (22), an external face of which cooperates with deformable means (26) which are interposed between the friction plate (22) and a fixed partition (18) of the runner (14) to allow movement of the friction plate (22) in a transverse direction perpendicular to the plane of the plate (22), and **in that**, when the guide section (18) is received in the runner (14), the deformable means act on the plate (22) so that the section (16) is in abutment simultaneously against the two opposite internal faces of the runner (14).

2. A wiping system according to Claim 1, **characterised in that** the deformable means consist of a sheet (26) of elastomer material, an internal face (28) of which is in abutment against the external face (35) of the plate (22) and an external face (30) of which is in abutment against the partition (18) of the runner (14).

3. A wiping system according to Claim 2, **characterised in that** the deformable sheet (26) has, on at least one of its faces (28, 30), protuberances in relief (32, 34, 36).

4. A wiping system according to Claim 3, **characterised in that** the protuberances in relief take the form of bars (32).

5. A wiping system according to Claim 4, **characterised in that** the protuberances in relief take the form of corrugated bars.

6. A wiping system according to Claim 3, **characterised in that** the protuberances in relief take the form of studs (34, 36).

7. A wiping system according to Claim 6, **characterised in that** the studs (34) are substantially cylindrical and solid.

8. A wiping system according to any one of Claims 3 to 6, **characterised in that** the deformable sheet (26) has, on its face (28, 30) opposite to that (30, 28) which carries the protuberances, recesses (38) provided to match the protuberances.

9. A wiping system according to any one of Claims 3 to 8, **characterised in that** the protuberances (32, 34, 36) are arranged on the internal face (28) of the deformable sheet (26).

10. A wiping system according to any one of Claims 3 to 8, **characterised in that** the protuberances (32, 34, 38) are arranged on the external face (30) of the deformable sheet (26).

11. A wiping system according to any one of Claims 2 to 10, **characterised in that** the deformable sheet (26) is produced by extrusion.

12. A wiping system according to any one of Claims 2 to 10, **characterised in that** the deformable sheet (26) is produced by moulding.

13. A wiping system according to Claim 12, **characterised in that** the deformable sheet (26) is moulded onto the friction plate (26).

14. A wiping system according to any one of Claims 2 to 12, **characterised in that** the deformable sheet (26) is bonded to the friction plate (22).

15. A wiping system according to any one of Claims 2 to 12, **characterised in that** the deformable sheet (26) has, at its two longitudinal ends, caps (46) which extend transversely inwards from the internal face (28) of the sheet (26) and which each delimit a housing (48), the two housings (48) being open longitudinally in the direction of each other in order each to receive a corresponding longitudinal end of the friction plate (22).

16. A wiping system according to any one of the preceding claims, **characterised in that** the runner (14) has two opposite fixed partitions (18), two friction plates (22) and two deformable elements (26) which are interposed respectively between one of the plates (22) and one of the partitions (18), and **in that** the guide section (16) of the shaft (10) is received with clamping between the two friction plates (22).

17. A wiping system according to Claim 16, **characterised in that** the two deformable elements (26) are produced in the form of a damper block (44) in a single piece.

18. A wiping system according to Claim 17, **characterised in that** the damper block (44) is moulded on around the two friction plates (22).
